(19) **Europäisches Patentamt / European Patent Office / Office européen des brevets**

(11) **EP 4 079 488 B1**

(12) # EUROPEAN PATENT SPECIFICATION

(45) Date of publication and mention
of the grant of the patent:
**11.10.2023  Bulletin 2023/41**

(21) Application number: **21169607.5**

(22) Date of filing: **21.04.2021**

(51) International Patent Classification (IPC):
**C08F 110/06** (2006.01)          **B29C 48/385** (2019.01)
**B29C 48/275** (2019.01)          **C08K 5/01** (2006.01)
**C08L 23/12** (2006.01)          **B29B 7/74** (2006.01)
**C08J 11/04** (2006.01)          **C08K 3/34** (2006.01)
**B29C 48/02** (2019.01)
**B29B 17/00** (2006.01)

(52) Cooperative Patent Classification (CPC):
(C-Sets available)
**B29B 7/90; B29B 7/007; B29B 7/726;**
**B29C 45/0001; C08L 23/06; C08L 23/12;**
B29B 7/42; B29B 7/845; B29B 9/06; B29B 9/12;
B29C 48/277; B29C 48/385; B29K 2023/12;
B29K 2105/16; B29K 2105/26;          (Cont.)

(54) **POLYOLEFIN COMPOSITION COMPRISING POLYPROPYLENE HOMOPOLYMER AND RECYCLED PLASTIC MATERIAL**

POLYOLEFINZUSAMMENSETZUNG MIT POLYPROPYLENHOMOPOLYMER UND RECYCELTEM KUNSTSTOFFMATERIAL

COMPOSITION DE POLYOLÉFINE COMPRENANT UN HOMOPOLYMÈRE DE POLYPROPYLÈNE ET UN MATÉRIAU PLASTIQUE RECYCLÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**26.10.2022  Bulletin 2022/43**

(73) Proprietor: **Borealis AG**
**1020 Vienna (AT)**

(72) Inventors:
• **KAHLEN, Susanne Margarete**
**4021 Linz (AT)**
• **BRAUN, Hermann**
**4021 Linz (AT)**
• **LEHNER, Gisela Karin**
**4021 Linz (AT)**
• **BACHTROD, Quang Manfred**
**4021 Linz (AT)**

(74) Representative: **Maikowski & Ninnemann**
**Patentanwälte Partnerschaft mbB**
**Postfach 15 09 20**
**10671 Berlin (DE)**

(56) References cited:
EP-A1- 0 673 966          WO-A1-2019/224129
WO-A1-2020/070176          US-A1- 2017 044 359
US-A1- 2018 215 846

• **CURTZWILER GREG W ET AL: "Mixed post-consumer recycled polyolefins as a property tuning material for virgin polypropylene", JOURNAL OF CLEANER PRODUCTION, ELSEVIER, AMSTERDAM, NL, vol. 239, 12 August 2019 (2019-08-12), XP085816937, ISSN: 0959-6526, DOI: 10.1016/J.JCLEPRO.2019.117978 [retrieved on 2019-08-12]**
• **VYNCKE GIANNI ET AL: "The effect of polyethylene on the properties of talc-filled recycled polypropylene", PLASTICS, RUBBER & COMPOSITES: MACROMOLECULAR ENGINEERING, [Online] 17 August 2020 (2020-08-17), pages 1-8, XP055849137, GB ISSN: 1465-8011, DOI: 10.1080/14658011.2020.1807729 internet Retrieved from the Internet: URL:http://dx.doi.org/10.1080/14658011.2020.1807729> [retrieved on 2021-10-04]**

**(Cont. next page)**

EP 4 079 488 B1

(52) Cooperative Patent Classification (CPC): (Cont.)
C08K 2201/005; C08L 2207/20

C-Sets
**C08L 23/06, C08L 23/12, C08L 23/12, C08K 3/34;**
**C08L 23/12, C08L 23/02, C08K 3/34;**
**C08L 23/12, C08L 23/12, C08L 23/06, C08K 3/34**

**Description**

The invention relates to a polyolefin composition comprising at least one polypropylene homopolymer and recycled plastic material, to an article comprising the polyolefin composition and a process for preparing such polyolefin composition.

Polyolefins, in particular polyethylene and polypropylene are increasingly consumed in large amounts in a wide range of applications, including packaging for food and other goods, fibres, automotive components, and a great variety of manufactured articles. Taking into account the huge amount of waste collected compared to the amount of waste recycled back into the stream, there is still a great potential for intelligent reuse of plastic waste streams and for mechanical recycling of plastic wastes.

Generally, recycled quantities of polypropylene on the market are mixtures of both polypropylene (PP) and polyethylene (PE), this is especially true for post-consumer waste streams. Moreover, commercial recyclates from post-consumer waste sources are conventionally cross-contaminated with non-polyolefin materials such as polyethylene terephthalate, polyamide, polystyrene or non-polymeric substances like wood, paper, glass or aluminum. These cross-contaminations drastically limit final applications of recycling streams such that no profitable final uses remain. Polyolefinic recycling materials, especially from post-consumer waste streams, are a mixture of PE and PP. The better the quality of the recyclate is, the less available it is and the more expensive it is.

Customers that are asking for recyclates require similar stiffness-impact strength as virgin ones. This can be achieved for example by using reinforced glass fibre compounds for structural products. The quality issue in recyclates compared to the virgin ones can be to some extent overcome by reinforcing the recyclates, where the reinforcement particles physically bond the dissimilar domains (PP and PE).

Compositions comprising virgin polymers (i.e. polymers used for the first time) and recycled mixed plastics have been studied. WO 2014167493 A1 describes a process for the preparation of a polyolefin mixture comprising the step (a) of mixing together a base polymeric mixture MB and a polymeric mixture MPR, wherein said mixture MPR is obtained from the recycling of post-consumer plastic materials. WO 2019/224129A1 describes a process to produce polypropylene-based compositions from post-consumer resin and polypropylene resin.

Curtzwiler et al., Mixed post-consumer recycled polyolefins as a property tuning material for virgin polypropylene", JOURNAL OF CLEANER PROOUCTION, 2019) discloses physical properties of polyolefin compositions of virgin polypropylene and a blend of recycled plastic material comprising polypropylene and polyethylene within the ratio between 3:7 and 49.5:1. namely 87.5 wt.% rPP and 12.5 wt.% rPE [7:1

Recycled mixed plastics reinforced with particulate material have also been studied. For example, recycled PP or PP/PE mixtures have been mixed with talc.

CN 110372957 describes a modified regenerated polypropylene nanocomposite material and preparation method thereof. Recycled polypropylene used as a raw material is mixed with an auxiliary material a filler, a toughening agent, a coupling agent, a crosslinking agent, a plasticizer, a lubricant, a compatibilizer and an antioxidant. The filler is modified nano $TiO_2$, modified silicon carbide and modified talc.

JP 2003-24377 discloses a recycled polyolefin comprising 3-50 parts of an inorganic filler. A recycled polyolefin with 5 parts talc and recycled Polypropylene PP has a flexural strength of 38 MPa, flexural modulus of 1890 MPa and an Izod impact strength of 2.5 $kJ/m^2$.

The polyolefin composition for automobile parts described in JP 06016876 A contains 40-70 % cryst. Polyolefins, 20-40 % inorganic fillers, and 5-30 % recycled polyolefin automobile interiors containing olefin elastomer (4-90 %) containing olefin thermoplastic elastomers, propylene (I) polymer foams, and/or I polymers and (b) optionally 5-15 parts olefin elastomers.

Vyncke et al., The effect of polyethylene on the properties of talc filled recycled polypropylene", PLASTICS, RUBBER & COMPOSITES: MACROMOLECULAR ENGINEERING, 2020) describes the reinforcemet of recycled poylpropylene w(rPP) with mineral fillers.

As one can see, the use of talc in polyolefin compounds is widely spread in the polyolefine industry. However, the use of polyolefine recyclates in combination with virgin polymers to create recyclate REC compounds is not yet widely spread.

Current virgin talc compounds are being replaced by recycling solutions. 100 % recycling solutions very often suffer from low mechanical performance, not suitable rheological behaviour for the targeted application and in general higher spread in the property profile of the recyclate. In order to compensate for these disadvantages, a wise combination of virgin polyolefins is needed.

Thus, it was an object of the invention to provide a polyolefin composition wherein at least a part of virgin polyolefin is replaced by polyolefin material recovered from waste plastic material while thermomechanical properties of such a polyolefin composition are at least maintained or even improved.

This object has been solved by providing a polyolefin composition as described in claim 1.

Thus, a polyolefin composition is provided that contains recycled plastic material, virgin polypropylene polymer and a particulate filler that confers isotropic properties to the polyolefin composition. Due to the specific properties of the particulate filler, such as talc, no coupling agents are necessary, as for example required when using glass fibers as additive. Talc particles confer isotropic properties into all directions. This allows the use of the polyolefin composition for different household appliances.

It is to be understood that the present polyolefin composition does not contain coupling agents, glass fibers, rubber and is essentially free of peroxides, preferably the peroxide content based on the total weight of the polyolefin composition is below 0.5 wt.-%.

It is further to be noted that talc can also be present in blend of recycled plastic material comprising mainly of polypropylene and polyethylene (as mentioned further below).Thus, the overall content of talc in the present polyolefin composition may also comprise the talc originally present in recycled blend.

For the purposes of the present description and of the subsequent claims, the term "recycled" is used to indicate that the material is recovered from post-consumer waste and/or industrial waste. Namely, post-consumer waste refers to objects having completed at least a first use cycle (or life cycle), i.e. having already served their first purpose and been through the hands of a consumer; while industrial waste refers to the manufacturing scrap which does normally not reach a consumer.

As described also further below, typical other components originating from the first use are thermoplastic polymers, like polystyrene and PA 6, talc, chalk, ink, wood, paper, limonene and fatty acids. The content of polystyrene (PS) and polyamide 6 (PA 6) in recycled polymers can be determined by Fourier Transform Infrared Spectroscopy (FTIR) and the content of talc, chalk, wood and paper may be measured by Thermogravimetric Analysis (TGA). It is to be understood the small amount of talc present in the recycled plastic material is not included in the amount of particulate material added subsequently to the polyolefin composition.

The term "virgin" denotes the newly produced materials and/or objects prior to first use and not being recycled. In case that the origin of the polymer is not explicitly mentioned the polymer is a "virgin" polymer.

The melt flow rate $MFR_2$ (ISO 1133, 2.16 kg, 230°C, measured according to ISO 1133) of the present polyolefin composition preferably is in the range between 4 and 15 g/10 min, more preferably between 5 and 12 g/10min, still more preferably between 6 and 10 g/10min.

In a preferred embodiment the present polyolefin composition is further characterized by a tensile modulus (ISO 527-2) of at least 3.2 GPa, preferably of at least 3.5 GPa; more preferably of at least 4 GPa, in particular in a range between 3 and 4.5 GPa, more in particular in a range between 3.3 and 4.2 GPa, even more particular in a range between 3.4 and 4.0 GPa.

In a further embodiment, the present polyolefin composition has an impact strength (ISO179-1, Charpy 1eA +23°C) of at least 1.0 $kJ/m^2$, preferably of at least 1.5 $kJ/m^2$, more preferably at least 1.8 $kJ/m^2$, still more preferably of at least 2 $kJ/m^2$, in particular in a range between 1.0 and 3.0 $kJ/m^2$, more in particular in a range between 1.3 and 2.5 $kJ/m^2$, even more particular in a range between 1.5 and 2.0 $kJ/m^2$

The total amount of all virgin polypropylene polymers homopolymers used in the present polyolefin composition may add up to a range between 6-25 wt%, preferably between 10-20 wt% (based on the overall weight of the polyolefin composition).

According to the invention, the polypropylene homopolymers used as virgin polymers in the present polyolefin composition are selected from a group comprising

- at least one polypropylene homopolymer (PPH-1) having a melt flow rate $MFR_2$ (230°C, 2.16 kg, measured according to ISO 1133) in the range of 5 - 10 g/10 min, preferably of 5 - 8 g/10min, more preferably of 6-7 g/10 min;
- at least one polypropylene homopolymer (PPH-2) having a melt flow rate $MFR_2$ (230°C, 2.16 kg, measured according to ISO 1133) in the range of range of 10 - 30 g/10min, preferably of 15 - 25 g/10min, more preferably of 18-22 g/10 min, such as 20 g/10 min;
- at least one polypropylene homopolymer (PPH-3) having a melt flow rate $MFR_2$ (230°C, 2.16 kg, measured according to ISO 1133) in the range of 5 - 15 g/10 min, preferably of 5 - 10 g/10min, more preferably of 7-9 g/10 min, such as 8 g/10 min;
- at least one polypropylene homopolymer (PPH-4) having a melt flow rate $MFR_2$ (230°C, 2.16 kg, measured according to ISO 1133) in the range of 60 - 100 g/10 min, preferably of 70 - 80 g/10min, more preferably of 73-77 g/10 min, such as 75 g/10 min, or from a combination thereof.

Polypropylene Virgin Polymers

The properties and features of the different polypropylene homopolymers that may be used in the present polyolefin composition are described in the following.

Polypropylene homopolymer (PPH-1):

The at least one polypropylene homopolymer (PPH-1) has a melt flow rate $MFR_2$ (230°C, 2.16 kg, measured according to ISO 1133) in the range of 3 -15 g/10 min, preferably of 5 - 10 g/10min, more preferably of 6 - 7 g/10 min.

The polypropylene homopolymer (PPH-1) has a melting temperature of at least 150°C; preferably of at least 160°C, preferably in the range of 165 - 170°C, like 167°C.

The polypropylene homopolymer (PPH-1) may have a Charpy Impact Strength measured according to ISO 179-1eA:2000 at 23°C of at least 2.0 kJ/m$^2$, preferably, at least 2.5 kJ/m$^2$, like in the range of 2.0 - 8 kJ/m$^2$, preferably in the range of 2.5 - 5.0 kJ/m$^2$, like 3.0 kJ/m$^2$.

The polypropylene homopolymer (PPH-1) may have a flexural modulus measured according to ISO 178 of at least 1.500 MPa, preferably at least 2.000 MPa, preferably in the range of 2.000 - 2500 MPa, like 2250 MPa.

A preferred material for polypropylene homopolymer (PPH-1) is inter alia commercially available from Borealis AG (Austria).

Polypropylene homopolymer (PPH-2):

The at least one polypropylene homopolymer (PPH-2) has a melt flow rate $MFR_2$ (230°C, 2.16 kg, measured according to ISO 1133) in the range of 10 - 30 g/10min, preferably of 15 - 25 g/10min, preferably of 20 g/10 min; and a stiffness of higher than 1800 MPa.

The polypropylene homopolymer (PPH-2) consists substantially, i.e. of more than 99.7 wt%, still more preferably of at least 99.8 wt%, of propylene units, based on the weight of the propylene homopolymer (PPH-2). In a preferred embodiment only propylene units are detectable in the propylene homopolymer (PPH-2).

It is appreciated that the polypropylene homopolymer (PPH-2) features a low amount of xylene cold soluble (XCS) fraction. The polypropylene homopolymer (PPH-2) may have an amount of xylene cold solubles (XCS) fraction of not more than 4.0 wt%, preferably not more than 3.0 wt%, more preferably not more than 2.5 wt%, like in the range of 0.1 - 4.0 wt%, preferably in the range of 0.1 - 3.0 wt%, more preferably in the range from 0.1 - 2.5 wt%, based on the weight of the polypropylene homopolymer (PPH-2).

The polypropylene homopolymer (PPH-2) may have a heat deflection temperature (HDT) measured according to according to ISO 75-2 of at least 90°C, preferably at least 100°C, more preferably at least 115°C, like in the range of 90 - 160°C, preferably in the range of 100 to 150°C, more preferably 115 - 130°C.

The polypropylene homopolymer (PPH-2) may have a Charpy Impact Strength measured according to ISO 179-1eA:2000 at 23°C of at least 1.0 kJ/m$^2$, preferably, at least 2.0 kJ/m$^2$, like in the range of 1.0 - 10 kJ/m$^2$, preferably in the range of 2.0 - 5.0 kJ/m$^2$, like 2.5 kJ/m$^2$. The polypropylene homopolymer (PPH-2) may have a flexural modulus measured according to ISO 178 of at least 500 MPa, preferably at least 1500 MPa, like in the range of 500 to 3500 MPa, preferably in the range of 1500 - 2500 MPa, like 2000 MPa.

The polypropylene homopolymer (PPH-2) may comprise a nucleating agent, which is preferably a polymeric nucleating agent, more preferably an alpha-nucleating agent, e.g. a polymeric alpha-nucleating agent. The alpha-nucleating agent content of the polypropylene homopolymer (PPH-2), is preferably up to 5.0 wt%. In a preferred embodiment, the polypropylene homopolymer (PPH-2) contains not more than 3000 ppm, more preferably of 1 to 2000 ppm of alpha-nucleating agent.

The polypropylene homopolymer (PPH-2) is known in the art and commercially available, for example from Borealis AG.

Polypropylene homopolymer (PPH-3):

The at least one polypropylene homopolymer (PPH-3) has a melt flow rate $MFR_2$ (230°C, 2.16 kg, measured according to ISO 1133) in the range of 5 - 15 g/10 min, preferably of 5 -10 g/10min, more preferably of 8 g/10 min; and a stiffness of higher than 1300 MPa.

The polypropylene homopolymer (PPH-3) has a melting temperature of at least 150°C; preferably of at least 158°C, preferably in the range of 158 - 167°C, like 162°C. The polypropylene homopolymer (PPH-3) may have a flexural modulus measured according to ISO 178 of at least 500 MPa, preferably at least 1000 MPa, preferably in the range of 1200 - 2000 MPa, like 1400 MPa.

A preferred material for polypropylene homopolymer (PPH-3) is inter alia commercially available from Borealis AG (Austria). Alternative suitable materials are high crystallinity polypropylene homopolymers as described for example in WO 03/031174 A2.

Polypropylene homopolymer (PPH-4):

The at least one polypropylene homopolymer (PPH-4) has a melt flow rate $MFR_2$ (230°C, 2.16 kg, measured according to ISO 1133) in the range of 60 - 100 g/10 min, preferably in the range of 70 - 80 g/10min, even more preferably of 75 g/10 min; and a stiffness of higher than 1300 MPa.

The polypropylene homopolymer (PPH-4) consists substantially, i.e. of more than 99.7 wt%, still more preferably of at least 99.8 wt%, of propylene units, based on the weight of the polypropylene homopolymer (PPH-4). In a preferred embodiment only propylene units are detectable in the polypropylene homopolymer (PPH-4).

It is appreciated that the polypropylene homopolymer (PPH-4) features a low amount of xylene cold soluble (XCS) fraction. The polypropylene homopolymer (PPH-4) may have an amount of xylene cold solubles (XCS) fraction of not more than 4.0 wt%, preferably not more than 3.5 wt%, like in the range of 0.1 - 4.0 wt%, preferably in the range of 0.1 - 3.5 wt%, based on the weight of the polypropylene homopolymer (PPH-4).

The polypropylene homopolymer (PPH-4) may have a heat deflection temperature (HDT) measured according to according to ISO 75-2 of at least 50°C, preferably at least 60°C, more preferably at least 75°C, like in the range of 50 - 120°C, preferably in the range of 60 - 100°C, more preferably 75 - 90°C.

The polypropylene homopolymer (PPH-4) may have a Charpy Notched Impact Strength (NIS) measured according to ISO 179-1 eA at 23°C of at least 0.5 $kJ/m^2$, preferably, at least 0.7 $kJ/m^2$, like in the range of 0.5 - 1.5 $kJ/m^2$, preferably in the range of 0.7 - 1.3 $kJ/m^2$, like 1.0 $kJ/m^2$. The polypropylene homopolymer (PPH-4) may have a flexural modulus measured according to ISO 178 of at least 500 MPa, preferably at least 1000 MPa, like in the range of 500 - 2500 MPa, preferably in the range of 1000 - 2000 MPa, like 1500 MPa.

In case the polypropylene homopolymer (PPH-4) comprises an alpha-nucleating agent it is appreciated that the polypropylene homopolymer (PPH-4) may comprise the alpha-nucleating agent in an amount of up to 5.0 wt%, based on the weight of the polypropylene homopolymer (PPH-4), preferably up to 3000 ppm, like in the range of 1 - 2000 ppm. However, in a preferred embodiment the polypropylene homopolymer (PPH-4) does not comprise any nucleating agent, i.e. the polypropylene homopolymer (PPH-4) is not nucleated.

The polypropylene homopolymer (PPH-4) is known in the art and commercially available from Borealis AG.

Blend of recycled material

The present polyolefin composition may comprise 35-55 wt%, preferably 40 - 50 wt% (based on the overall weight of the polyolefin composition) of the blend of recycled plastic material comprising polypropylene and polyethylene having a melt flow rate $MFR_2$ (230°C, 2.16 kg, measured according to ISO 1133) in the range of 4-50 g/10 min, preferably of 10-30 g/10 min, more preferably of 15 - 22 g/10min.

The blend is obtained from a recycled waste stream. The blend can be either recycled post-consumer waste or post-industrial waste, such as for example from the automobile industry, or alternatively, a combination of both. It is particularly preferred that blend consists of recycled post-consumer waste and/or post-industrial waste.

In one aspect blend may be a polypropylene (PP) rich material of recycled plastic material that comprises significantly more polypropylene than polyethylene. Recycled waste streams, which are high in polypropylene can be obtained for example from the automobile industry, particularly as some automobile parts such as bumpers are sources of fairly pure polypropylene material in a recycling stream or by enhanced sorting. PP rich recyclates may also be obtained from yellow bag feedstock when sorted accordingly. The PP rich material may be obtainable by selective processing, degassing and filtration and/or by separation according to type and colors such as NIR or Raman sorting and VIS sorting. It may be obtained from domestic waste streams (i.e. it is a product of domestic recycling) for example the "yellow bag" recycling system organized under the "Green dot" organization, which operates in some parts of Germany.

Preferably, the polypropylene rich recycled material is obtained from recycled waste by means of plastic recycling processes known in the art. Such PP rich recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc. None exhaustive examples of polypropylene rich recycled materials include: Dipolen®PP, Purpolen®PP (Mtm Plastics GmbH), MOPRYLENE PC B-420 White, MOPRYLENE PC B 440 (Morssinkhof Plastics, NL), , SYSTALEN PP-C24000; Systalen PP-C44000; Systalen 13404 GR 014, Systalen PP-C14900 GR000 (Der grüne Punkt, DE), Vision (Veolia) PPC BC 2006 HS or PP MONO.

It is considered that the present invention could be applicable to a broad range of recycled polypropylene materials or materials or compositions having a high content of recycled polypropylene. The polypropylene-rich recycled material may be in the form of granules.

As mentioned previously, the polyolefin composition in accordance with the present invention comprises as blend a polymer blend, comprising a1) polypropylene and a2) polyethylene; wherein the weight ratio of a1) to a2) is from 3:7 to 49.5:1; and wherein the polymer blend is a recycled material.

Still a further preferred embodiment of the present invention stipulates that the ratio of polypropylene a1) to polyethylene a2) is from 7:1 to 40:1 and preferably from 10:1 to 30:1.

Another preferred embodiment of the present invention stipulates that the melt enthalpy of component a2) / melt enthalpy of component a1) in the polyolefin composition is in the range of 0.2 - 2.0 and preferably in the range of 0.25 - 1.75.

According to one embodiment, blend of recycled plastic material comprises a relative amount of units derived from propylene of greater than 50 wt%, preferably greater than 53 wt%, more preferably greater than 60 wt%, more preferably greater than 70 wt%, more preferably greater than 75 wt%, more preferably greater than 80 wt%, still more preferably greater than 90 wt% and even more preferably greater than 95 wt% with respect to the total weight of the composition of blend.

Still a further preferred embodiment of the present invention stipulates that the content of polypropylene a1) in blend is in the range from 75 - 99 wt.-% and preferably in the range from 83 - 95 wt.-% based on the overall weight of blend A). The content of polypropylene a1) in blend may be determined by FTIR spectroscopy as described in the experimental section. More preferably component a1) comprises more than 95 wt.-%, preferably from 96 - 99.9 wt.-% isotactic polypropylene and most preferably consists of isotactic polypropylene.

Furthermore, blend may have a relative amount of units derived from ethylene of less than 47 wt%, more preferably less than 40 wt%, more preferably less than 30 wt%, more preferably less than 20 wt%, most preferably less than 10 wt%. Usually, the relative amount of units derived from ethylene is more than 5 wt% with respect to the total weight blend It is to be understood that the ethylene present is preferably ethylene derived from polyethylene and ethylene containing copolymers.

In another preferred embodiment of the present invention the content of polyethylene a2) in blend is in the range from 1 -25 wt.-%, preferably in the range from 5 - 20 wt% and more preferably in the range from 7 - 17 wt.-% based on the overall weight of blend A). The content of polyethylene a2) in blend may be determined by Crystex as described in the experimental section. More, preferably component a2) consists of polyethylene and ethylene containing copolymers.

The C2 (SF) content of the soluble fraction of the recyclate blend, as determined by quantitative FT-IR spectroscopy calibrated by $^{13}$C-NMR spectroscopy, is in a range from 25 - 40 wt%, preferably 27 - 35 wt%, more preferably 29 - 34 wt%.

The C2 (CF) content of the crystalline faction of the recyclate blend, as determined by quantitative FT-IR spectroscopy calibrated by $^{13}$C-NMR spectroscopy, is in a range from 4 - 20 wt%, preferably 5-15 wt%, more preferably 8-12 wt%.

The polyethylene fraction of the recycled material can comprise recycled high-density polyethylene (rHDPE), recycled medium-density polyethylene (rMDPE), recycled low-density polyethylene (rLDPE), linear low density polyethylene (LLDPE) and the mixtures thereof. In a certain embodiment, the recycled material is high density PE with an average density of greater than 0.8 g/cm$^3$, preferably greater than 0.9 g/cm$^3$, most preferably greater than 0.91 g/cm$^3$.

The polyethylene fraction of the recycled material may also comprise a plastomer. A plastomer is a polymer material that combines rubber-like properties with the processing ability of plastic. Important plastomers are ethylene-alpha olefin copolymers.

The ethylene based plastomer is preferably a copolymer of ethylene and a $C_4$ - $C_8$ alphaolefin. Suitable $C_4$ - $C_8$ alpha-olefins include 1-butene, 1-hexene and 1-octene, preferably 1-butene or 1-octene and more preferably 1-octene. Preferably, copolymers of ethylene and 1-octene are used. Such ethylene based plastomers are commercially available, i.a. from Borealis AG (AT) under the tradename Queo, from DOW Chemical Corp (USA) under the tradename Engage or Affinity, or from Mitsui under the tradename Tafmer. Alternatively, the ethylene based plastomer can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons. It is possible that the ethylene based plastomer is already contained in the post - consumer and/or post-industrial waste being used for the production of recyclate blend. Alternatively, it is possible that the ethylene based plastomer is added to the post-consumer and/or post-industrial waste during the waste plastic recycling process where the recyclate blend is produced.

Another preferred embodiment of the present invention stipulates that the recyclate blend comprises less than 5 wt.-%, preferably less than 3 wt.-% and more preferably from 0.01 to 2 wt.-% based on the overall weight of the recyclate blend of thermoplastic polymers different from a1) and a2), more preferably less than 4.0 wt.-% PA 6 and less than 5 wt.-% polystyrene, still more preferably blend comprises 0.5 - 3 wt.-% polystyrene.

According to still another preferred embodiment of the present invention the recyclate blend comprises less than 5 wt.-%, preferably less than 4 wt.-% and more preferably from 0.01 to 4 wt.-% based on the overall weight of the recyclate blend of talc.

In another preferred embodiment of the present invention the recyclate blend comprises less than 4 wt.-%,

preferably less than 3 wt.-% and more preferably from 0.01 to 2 wt.-% based on the overall weight of the recyclate blend of chalk.

According to another preferred embodiment of the present invention the recyclate blend comprises less than 1 wt.-%, preferably less than 0.5 wt.-% and more preferably from 0.01 to 1 wt.-% based on the overall weight of the recyclate blend of paper.

Still another preferred embodiment of the present invention stipulates that the recyclate blend comprises less than 1 wt.-%, preferably less than 0.5 wt.-% and more preferably from 0.01 to 1 wt.-% based on the overall weight of the recyclate blend of wood.

In another preferred embodiment of the present invention the recyclate blend comprises less than 1 wt.-%, preferably less than 0.5 wt.-% and more preferably from 0.01 to 1 wt.-% based on the overall weight of the recyclate blend of metal.

According to the present invention, the recyclate blend has a content of limonene as determined using solid phase microextraction (HS-SPME-GC-MS) of 0.1 ppm to 100 ppm, more preferably from 1 ppm to 50 ppm, most preferably from 2 ppm to 35 ppm. Limonene is conventionally found in recycled polyolefin materials and originates from packaging applications in the field of cosmetics, detergents, shampoos and similar products. Therefore, the recyclate blend contains limonene, when the recyclate blend contains material that originates from such types of domestic waste streams.

The fatty acid content is yet another indication of the recycling origin of the recyclate blend. However, in some cases, the fatty acid content may be below the detection limit due to specific treatments in the recycling process. According to the present invention, the recyclate blend preferably has a content of fatty acids as determined using solid phase microextraction (HS-SPME-GC-MS) of from 1 ppm to 200 ppm, preferably from 1 ppm to 150 ppm, more preferably from 2 ppm to 100 ppm, most preferably from 3 ppm to 80 ppm.

In a preferred aspect, the recyclate blend (i) contains less than 5 wt%, preferably less than 1.5 wt% polystyrene; and/or (ii) contains less than 3.5 wt%, preferably less than 1 wt% talc; and/or (iii) contains less than 1.0 wt%, preferably less than 0.5 wt% polyamide.

Due to the recycling origin blend may also contain: organic fillers, and/or inorganic fillers, and/or additives in amounts of up to 10 wt%, preferably 3 wt% with respect to the weight of the blend .

Thus, in an embodiment of the present polyolefin composition blend of recycled plastic material comprises

A-1) a content of polypropylene of 50 - 99 wt%,
A-2) a content of polyethylene of 1 - 40 wt%,
A-3) 0 - 5.0 wt% of polystyrene and/or copolymers such as ABS,
A-4) 0 - 3.0 wt% stabilizers,
A-5) 0 - 4.0 wt% polyamide-6,
A-6) 0 - 3.0 wt% talc,
A-7) 0 - 3.0 wt% chalk,
A-8) 0 - 1.0 wt% paper,
A-9) 0 - 1.0 wt% wood,
A-10) 0 to 0.5 wt% metal,
A-11) 0.1 ppm - 100 ppm of limonene as determined by using solid phase microextraction (HS-SPME-GC-MS), and
A-12) 0 - 200 ppm total fatty acid content as determined by using solid phase microextraction (HS-SPME-GC-MS)

wherein all amounts are given with respect to the total weight of the recyclate blend.

As stated above the recyclate blend may include one or more further components, selected from:

A-4) up to 3.0 wt% stabilizers, preferably up to 2.0 wt% stabilizers,
A-5) up to 4.0 wt% polyamide-6, preferably up to 2.0 wt% polyamide-6,
A-6) up to 3.0 wt% talc, preferably up to 1.0 wt% talc,
A-7) up to 3.0 wt% chalk, preferably up to1.0 wt% chalk,
A-8) up to 1.0 wt% paper, preferably up to 0.5 wt% paper,
A-9) up to 1.0 wt% wood, preferably up to 0.5 wt% wood, and
A-10) up to 0.5 wt% metal, preferably up to 0.1 wt% metal,

based on the overall weight of the recyclate blend.

In one embodiment blend of recycled plastic material may have a melt flow rate (ISO 1133, 2.16 kg, 230°C) in the range of 4 to 20 g/10min, preferably of 5 to 15 g/10min, more preferably of 6 to 12 g/10min.

According to another embodiment blend of recycled plastic material may have a melt flow rate $MFR_2$ (ISO 1133, 230°C, 2.16 kg) in the range of 16 to 50 g/10 min and preferably in the range of 18 to 22 g/10 min.

According to still another embodiment the blend of recycled plastic material may have a melt flow rate $MFR_2$

(ISO 1133, 230°C, 2.16 kg) in the range of 5 to 100 g/10 min, preferably 10 to 80 g/10 min, preferably in the range of 15 to 50 g/10 min, more preferably in the range of 20 to 50 g/10 min or 20 to 30 g/10 min or 20 to 25 g/ 10 min.

In a further prefered embodiment of the present invention the Charpy Notched Impact Strength measured according to ISO 179-1eA at 23°C of the recyclate blend is more than 3.0 kJ/m$^2$, preferably in the range from 4.0 to 8.0 kJ/m$^2$ and more preferably in the range from 5.0 to 6.0 kJ/m$^2$.

A further preferred embodiment of the present invention stipulates that the Tensile Modulus measured according to ISO527-2 of the recyclate blend A is in the range of 800 to 1500 MPa and preferably in the range of 1100 to 1400 MPa.

Particulate filler material

Different particulate material, such as talc or chalk, may be used as filler, wherein talc is the most preferred one.

In an embodiment the present polyolefin composition comprises 30-50 wt%, preferably 35-45 wt%, more preferably 38-40 wt% (based on the overall weight of the polyolefin composition) of talc.

The talc comprises particles with a size $d_{50}$ of 2.5 - 5 $\mu$m, preferably of 3.0 - 4.5 $\mu$m, more preferably of 3.5 - 4.0 $\mu$m. In one preferred embodiment talc 1 is used which is a fine micronised talc with Particle Size $d_{50}$ of about 3.5 - 5.0 $\mu$m. In another preferred embodiment talc 2 is used which is a fine micronised talc with Particle Size $d_{50}$ of about 2.9 - 4.1 $\mu$m. The diameter of the commercially available talc is typically measured by the Sedigraph method. The talc is commercially available from known suppliers such as Imerys.

In the following, more specific embodiments of the present composition are described.

In a first embodiment a polyolefin composition is provided that comprises

a) 20-30 wt%, in particular 25wt% (based on the overall weight of the polyolefin composition) of at least one polypropylene homopolymer (PPH-1) having a melt flow rate $MFR_2$ (230°C, 2.16 kg, measured according to ISO 1133) in the range of 5 - 10 g/10 min, preferably of 5 - 8 g/10min, more preferably of 6-7 g/10 min;

b) 25-35 wt%, in particular 30 wt% (based on the overall weight of the polyolefin composition) of the blend of recycled plastic material comprising polypropylene and polyethylene;

c) 30-50 wt%, in particular 40 wt% (based on the overall weight of the polyolefin composition) of at least one talc, and optionally further additives, wherein the sum of all ingredients adds always up to 100 wt%.

Such a first polyolefin composition may have

- a melt flow rate $MFR_2$ (230°C, 2.16 kg, measured according to ISO 1133) in the range of 2-10 g/10 min; preferably in the range of 3 - 7 g/10 min, more preferably in the range of 4 - 5 g/10 min;
- a tensile modulus (ISO 527-2) of at least 3 GPa, preferably at least 3.5 GPa, preferably at least 4 GPa, and
- an impact strength (Charpy 1eA +23°C) of at least 1 kJ/m$^2$, preferably of at least 2 kJ/m$^2$, preferably of at least 2.4 kJ/m$^2$.

In a second embodiment a polyolefin composition is provided that comprises

a) 5-30 wt%, in particular 5-20 wt%, more in particular 5-15 wt% (based on the overall weight of the polyolefin composition) of at least one polypropylene homopolymer (PPH-2) having a melt flow rate $MFR_2$ (230°C, 2.16 kg, measured according to ISO 1133) in the range of range of 10 to 30 g/10min, preferably of 15 to 25 g/10min, more preferably of 20 g/10 min

b) 30-50 wt%, in particular 40-50 wt% (based on the overall weight of the polyolefin composition) of the blend of recycled plastic material comprising polypropylene and polyethylene;

c) 30-50 wt%, in particular 40 wt% (based on the overall weight of the polyolefin composition) of at least one particulate filler, in particular talc, and optionally further additives, wherein the sum of all ingredients adds always up to 100 wt%.

Such a second polyolefin composition may have

- a melt flow rate $MFR_2$ (230°C, 2.16 kg, measured according to ISO 1133) in the range of 5-15 g/10 min; preferably in the range of 6 - 12 g/10 min, more preferably in the range of 7-10 g/10 min;
- a tensile modulus (ISO 527-2) of at least 3 GPa, preferably at least 3.5 GPa, preferably at least 4 GPa, and
- an impact strength (Charpy 1eA +23°C) of at least 1 kJ/m$^2$, preferably of at least 1.5 kJ/m$^2$, preferably of at least 2.0 kJ/m$^2$.

The present polyolefin composition is preferably free of glass fibers and coupling agents.

However, further additives may be added.

Additives

In one embodiment the polyolefin composition may comprise at least one dosing agent for accepting fillers/pigments during extrusion. The at least one dosing agent may be a polypropylene homopolymer with melt flow rates MFR2 between 1 and 5 g/10 min, preferably between 2 and 3 g/ 10 min and a density between 800 and 100 kg/m3, preferably between 900 and 950 kg/m3. Such a polymer is commercially available, for example under the trade name HC001A-B1 of Borealis AG. The amount of dosing agent in the polyolefin composition may be 0.5-2 wt%, such as 0.6-1.5 wt%, preferably 0.65-0.8 wt%.

In another embodiment the polyolefin composition may comprise at least one impact modifier. The impact modifier may be a plastomer and/or an elastomer. Suitable elastomers may be ethylene/propylene copolymers with different C2/C3 ratio (C2/C3 or C3/C2 elastomers), ethylene/butene copolymers (C2/C4 elastomers), ethylene/octene copolymers (C2/C8 elastomers), grafted ethylene elastomers (such as MAH grafted ethylene elastomers) or C2/C3 and C2/C4 block copolymers, in particular an ethylene based 1-octene elastomer. The ethylene based 1-octene elastomer may have an MFR (190 °C, 2.16 kg) between 0.5 and 8 g/10 min, a density between 866 - 904 kg/m$^3$. Such a compound is commercially available, for example under the trade name Queo 6800.

Examples of other additives for use in the composition are pigments or dyes (for example carbon black), stabilizers (anti-oxidant agents), anti-acids and/or anti-UVs, antistatic agents, nucleating agents and utilization agents (such as processing aid agents). Preferred additives are carbon black, at least one antioxidant and/or at least one UV stabilizer.

Generally, the amount of these additives is in the range of 0 to 5.0 wt%, preferably in the range of 0.01 to 3.0 wt%, more preferably from 0.01 to 2.0 wt% based on the weight of the total composition.

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1).

Common antiblocking agents are natural silica such as diatomaceous earth (such as CAS No. 60676-86-0 (SuperfFloss™), CAS-No. 60676-86-0 (SuperFloss E™), or CAS-No. 60676-86-0 (Celite 499™)), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS -No. 52829-07-9, Tinuvin 770); 2-hydroxy-4-n-octoxy-benzophenone (CAS-No. 1843-05-6, Chimassorb 81). Preferred UV stabilizers may be low and/or high molecular weight UV stabilizers such as n-Hexadecyl- 3,5-di-t-butyl-4-hydroxybenzoate, A mixture of esters of 2,2,6,6-tetramethyl-4-piperidinol and higher fatty acids (mainly stearic acid) and/or Poly((6-morpholino-s-triazine-2,4-diyl)(1,2,2,6,6-pentamethyl-4-piperidyl)imino)hexameth-ylene (1,2,2,6,6-pentamethyl-4-piperidyl)imino)).

Alpha nucleating agents like sodium benzoate (CAS No. 532-32-1); 1,3:2,4-bis(3,4-dimethylbenzylidene)sorbitol (CAS 135861-56-2, Millad 3988). Suitable antistatic agents are, for example, glycerol esters (CAS No. 97593-29-8) or ethoxylated amines (CAS No. 71786-60-2 or 61791-31-9) or ethoxylated amides (CAS No. 204-393-1). Usually these additives are added in quantities of 100-2.000 ppm for each individual component of the polymer.

The polyolefin composition according to the invention can be used for a wide range of applications in the manufacture of appliances, in particular household appliances.

It is appreciated that the present invention also refers to a process for producing the polyolefin compositions as defined herein.

The process comprises the steps of

- providing the at least polypropylene homopolymer, the blend of recycled plastic material, and the particulate filler, such as talc, in the required amounts;
- feeding /dosing the at least one polypropylene homopolymer, the blend of recycled plastic material and the particulate filler eparately or as a mixture into at least one extruder,
- melting the mixture in the at least one extruder, and

- optionally pelletizing the obtained polyolefin composition.

In an embodiment of the present process the at least one polypropylene homopolymer and the blend of recycled plastic material are provided in granular form or as flakes.

Thus, in one embodiment of the present process all polymer ingredients, i.e. virgin homopolymer and recyclate, are provided as granula and may be dosed into the extruder / compounder separately. In another embodiment the granula of the polymer ingredients are premixed and may be dosed as a mixture into the extruder / compounder.

The recyclate granula are provided as follows: flakes of the recyclate undergo processing steps (purification by filtration, degassing, additives) in an extruder (single screw extruder) and are finally granulated. The recyclate granula are then fed into the extruder / compounder separately or together with the virgin homopolymer where they undergoe a (second) melting process (what may be thermally damaging to the recyclate).

In another embodiment of the present process the blend of recycled plastic material is fed into at least one first extruder, in particular a single screw extruder, is molten and the melt is subsequently fed into at least one second extruder, wherein the at least one polypropylene homopolymer and the particulate material are dosed into the at least one second extruder. In this embodiment the recyclate is molten only once, thus avoiding thermal damage to the recyclate.

In particular, flakes of recyclate are dosed into a combination of a single and double screw extruder (in series). In the single screw extruder the recyclate flakes are purified (by filtration), and optionally provided with additives. The melt is then directly fed into the second extruder / compounder. The remaining ingredients are subsequently dosed into the compounder.

## Experimental Section

The following Examples are included to demonstrate certain aspects and embodiments of the invention as described in the claims. It should be appreciated by those of skill in the art, however, that the following description is illustrative only and should not be taken in any way as a restriction of the invention.

## Test Methods

The following definitions of terms and determination methods apply for the above general description of the invention as well as to the below examples unless otherwise defined.

### a) Amount of iPP, Polystyrene, Content of ethylene (and ethylene containing copolymers) and Amount of Polyamide-6 and polystyrene (and containing copolymers)

To establish different calibration curves different standards, iPP and HDPE and iPP, PS and PA6 were blended. For the quantification of the content of the foreign polymers, IR spectra were recorded in the solid-state using a Bruker Vertex 70 FTIR spectrometer. Films were prepared with a compression-moulding device at 190 $\underline{o}$C with 4 - 6 MPa clamping force. The thickness of the films for the calibration standards for iPP and HDPE was 300 $\mu$m and for the quantification of the iPP, PS and PA 6 50-100 $\mu$m film thickness was used. Standard transmission FTIR spectroscopy is employed using a spectral range of 4000-400 $cm^{-1}$, an aperture of 6 mm, a spectral resolution of 2 $cm^{-1}$, 16 background scans, 16 spectrum scans, an interferogram zero filling factor of 32 and Norton Beer strong apodisation.

The absorption of the band at 1167 $cm^{-1}$ in iPP is measured and the iPP content is quantified according to a calibration curve (absorption/thickness in cm versus iPP content in weight %). The absorption of the band at 1601 $cm^{-1}$ (PS) and 3300 $cm^{-1}$ (PA6) are measured and the PS and PA6 content quantified according to the calibration curve (absorption/thickness in cm versus PS and PA content in wt %). The content of polyethylene and ethylene containing copolymers is obtained by subtracting (iPP+PS+PA6) from 100, taking into account the content of non-polymeric impurities as determined in the methods below. The analysis is performed as a double determination.

b) Amount of Talc and Chalk were measured by Thermogravimetric Analysis (TGA);
experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C (WCO2) was assigned to $CO_2$ evolving from $CaCO_3$, and therefore the chalk content was evaluated as:

$$Chalk\ content = 100/44 \times WCO2$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times WCO2 - Wcb$$

Where Ash residue is the weight% measured at 900°C in the first step conducted under nitrogen. The ash content is estimated to be the same as the talc content for the investigated recyclates.

**c) Amount of Paper, Wood**

Paper and wood were determined by conventional laboratory methods including milling, floatation, microscopy and Thermogravimetric Analysis (TGA) or floating techniques (dissolution of the polymer and then gravimetric determination of the paper and wood content).

**d) Amount of Metals** was determined by x ray fluorescence (XRF).

**e) Amount of Limonene** was determined by solid phase microextraction (HS-SPME-GC-MS). Additional details are given below with respect to the specific sample.

**f) Amount of total fatty acids**
was determined by solid phase microextraction (HS-SPME-GC-MS).

Additional details are given below with respect to the specific sample.
**g) Melt flow rates** were measured with a load of 2.16 kg ($MFR_2$) at 230 °C or 190°C as indicated. The melt flow rate is that quantity of polymer in grams which the test apparatus standardized to ISO 1133 extrudes within 10 minutes at a temperature of 230 °C (or 190°C) under a load of 2.16 kg.

**h) Tensile Modulus, Tensile Strength, Tensile Strain at Break, Tensile Strain at Tensile Strength, Tensile Stress at Break, Flexural Modulus**

The measurements were conducted after 96 h conditioning time (at 23°C at 50 % relative humidity) of the test specimen.
Tensile Modulus was measured according to ISO 527-2 (cross head speed = 1 mm/min; 23°C) using injection moulded specimens as described in EN ISO 1873-2 (dog bone shape, 4 mm thickness).
Tensile strength and tensile Strain at Break was measured according to ISO 527-2 (cross head speed = 50 mm/min; 23°C) using injection moulded specimens as described in EN ISO 1873-2 (dog bone shape, 4 mm thickness).
Tensile Strain at Tensile Strength was determined according to ISO 527-2 with an elongation rate of 50 mm/min until the specimen broke using injection moulded specimens as described in EN ISO 1873-2 (dog bone shape, 4 mm thickness).
Tensile Stress at Break was determined according to ISO 527-2 (cross head speed = 50 mm/min) on samples prepared from compression-moulded plaques having a sample thickness of 4 mm.
Flexural modulus is determined according to ISO 178 standard.

**i) Impact strength** was determined as Charpy Impact Strength according to ISO 179-1/1eA at +23 °C (Notched) or according to ISO 179-1/1eU +23 ° C (Unnotched) on injection moulded specimens of 80 x 10 x 4 mm prepared according to EN ISO 1873-2. According to this standard samples are tested after 96 hours.

**j) Puncture energy** was determined according to ISO 6603-2, 4.4m/s, 2 mm, 23°C.

k) **Xylene Cold Solubles (XCS)** are measured at 25°C according ISO 16152; first edition; 2005-07-01.

**l) Crystex analysis**

*Crystalline and soluble fractions method*

The crystalline (CF) and soluble fractions (SF) of the polypropylene (PP) compositions as well as the comonomer content and intrinsic viscosities of the respective fractions were analyzed by the CRYSTEX QC, Polymer Char (Valencia, Spain). The crystalline and amorphous fractions are separated through temperature cycles of dissolution at 160 °C, crystallization at 40 °C and re-dissolution in a 1,2,4-trichlorobenzene (1,2,4-TCB) at 160 °C. Quantification of SF and CF and determination of ethylene content (C2) of the parent EP copolymer and its soluble and crystalline fractions are achieved by means of an infrared detector (IR4) and an online 2-capillary viscometer which is used for the determination of the intrinsic viscosity (iV). The IR4 detector is a multiple wavelength detector detecting IR absorbance at two different bands (CH3 and CH2) for the determination of the concentration and the Ethylene content in Ethylene-Propylene copolymers. IR4 detector is calibrated with series of 8 EP copolymers with known Ethylene content in the range of 2 wt.-% to 69 wt.-% (determined by $^{13}$C-NMR spectroscopy) and various concentration between 2 and 13mg/ml for each used EP copolymer used for calibration.

The amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%.

The intrinsic viscosity (iV) of the parent EP copolymer and its soluble and crystalline fractions are determined with a use of an online 2-capillary viscometer and are correlated to corresponding iV's determined by standard method in decalin according to ISO 1628. Calibration is achieved with various EP PP copolymers with iV = 2-4 dL/g.

A sample of the PP composition to be analyzed is weighed out in concentrations of 10mg/ml to 20mg/ml. After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 800 rpm.

A defined volume of the sample solution is injected into the column filled with inert support where the crystallization of the sample and separation of the soluble fraction from the crystalline part is taking place. This process is repeated two times. During the first injection the whole sample is measured at high temperature, determining the iV[dl/g] and the C2[wt.-%] of the PP composition. During the second injection the soluble fraction (at low temperature) and the crystalline fraction (at high temperature) with the crystallization cycle are measured (wt.-% SF, wt.-% C2, iV).

EP means ethylene propylene copolymer.

PP means polypropylene.

l) **Intrinsic Viscosity** is measured according to DIN ISO 162811, October 1999 (in Decalin at 135°C).

In Table 1 several examples (comparative-CE; inventive-IE) are summarized.

Different blends A1-A7 of recycled material were used. The blends are characterized by the following properties:

Blend A1:
total C2 content 10-15 wt%, C2 (CF) content 8-12 wt%, C2 (SF) content 29-32 wt%, $MFR_2$ 12 - 14 g/ 10 min, tensile modulus 1200 - 1300 MPa, Impact strength (charpy test 23°C) 5-6 KJ/m$^2$;

Blend A2:
total C2 content 6-7 wt%, C2 (CF) content 4-5 wt%, C2 (SF) content 29-30 wt%, $MFR_2$ 80 - 85 g/ 10 min, tensile modulus 1200 - 1300 MPa, Impact strength (charpy test 23°C) 3-4 KJ/m$^2$;

Blend A3:
total C2 content 8-9 wt%, C2 (CF) content 4-5 wt%, C2 (SF) content 30-34 wt%, $MFR_2$ 32 - 34 g/ 10 min, tensile modulus 1300 - 1400 MPa, Impact strength (charpy test 23°C) 5-6.5 KJ/m$^2$;

Blend A4:
$MFR_2$ 18-19 g/ 10 min, tensile modulus 1200 - 1300 MPa, Impact strength (charpy test 23°C) 5-6 KJ/m$^2$;

Blend A5:
total C2 content 9-11 wt%, C2 (CF) content 7-8 wt%, C2 (SF) content 32-33 wt%, $MFR_2$ 24 - 25 g/ 10 min, tensile modulus 1300 - 1400 MPa, Impact strength (charpy test 23°C) 5-6 KJ/m$^2$;

Blend A6:
total C2 content 7-9 wt%, C2 (CF) content 5-7 wt%, C2 (SF) content 29-34 wt%, $MFR_2$ 23 - 25 g/ 10 min, tensile modulus 1100 - 1300 MPa, Impact strength (charpy test 23°C) 4-5 KJ/m$^2$;

Blend A7:
total C2 content 7-9 wt%, C2 (CF) content 5-7.5 wt%, C2 (SF) content 27-33 wt%, $MFR_2$ 15 - 17 g/ 10 min, tensile modulus 1200 - 1300 MPa, Impact strength (charpy test 23°C) 5-6 KJ/m$^2$;

Table 1 refers to a polyolefin compositions comprising:

- Comparative Example (CE1): one polypropylene homopolymer (PPH-3, $MFR_2$ of 8g/10 min) and minor amounts of a further polypropylene homopolymer (PPH-4, $MFR_2$ of 75g/10 min);
- Inventive Example (IE1): one polypropylene homopolymer (PPH-1, MFR2 of 6.5 g/10 min) and one blend of recycled material (Blend A1);
- Inventive Example (IE2): one polypropylene homopolymer (PPH-2, MFR2 of 20 g/10 min) and one blend of recycled material (Blend A6);
- Inventive Example (IE3): one polypropylene homopolymer (PPH-2, MFR2 of 20 g/10 min) and one blend of recycled material (Blend A1);
- Inventive Example (IE4): one polypropylene homopolymer (PPH-2, MFR2 of 20 g/10 min) and one blend of recycled material (Blend A5);
- Inventive Example (IE5): one polypropylene homopolymer (PPH-2, MFR2 of 20 g/10 min) and one blend of recycled material (Blend A3);
- Inventive Example (IE6): one polypropylene homopolymer (PPH-2, MFR2 of 20 g/10 min) and one blend of recycled material (Blend A7);
- Inventive Example (IE 7): one polypropylene homopolymer (PPH-2, MFR2 of 20 g/10 min) and one blend of recycled material (Blend A2);
- Inventive Example (IE8): one polypropylene homopolymer (PPH-2, MFR2 of 20 g/10 min) and one blend of recycled material (Blend A4);

Talc 2.9 available under the trade name Mistron 75-6 A was used.

The following additives were used: Antioxidants: AO1 (IRGAFOS 168FF), AO2 (ARENOX DS), AO3 (!rganox1010FF), Coating: Araldite GT 7072 (unmodified epoxy resin based on Bisphenol A with a narrow molecular weight distribution); Pigment: MB-Black (CBMB-LD-09); Dosing agent: HC001A-B1; ; Antistatic and Antifogging agents: AA122PWD (Grindsted PS 426), AA120PWD (Dimodan HP).

As can be seen in Table 1 by replacing the virgin compound, the composition with a recyclate content between 30 and 50 wt% gives a comparable level of stiffness (compare IE1: 4192 MPa) and an increase in Charpy NIS at room temperature from 1.6 to 2.4 $kJ/m^2$. IE7 contains 50 wt% of recyclate, and still has a stiffness of 4335 MPa. All recycling compositions (IE1-IE8) show better or similar flowability compared to the virgin talc compound.

Table 1: Properties of polyolefin compositions comprising only propylene homopolymer mixed with talc (CE1) and comprising propylene homopolymer, a blend of recycled material each mixed with talc (IE1-IE8)

| Material | unit | CE1 | IE1 | IE2 | IE3 | IE4 | IE5 | IE6 | IE7 | IE8 |
|---|---|---|---|---|---|---|---|---|---|---|
| PPH-1 | wt% | | 25,45 | | | | | | | |
| PPH-3 | wt% | 56,4 | | | | | | | | |
| PPH-2 | wt% | | | 6 | 6 | 6 | 6 | 6 | 26 | 16 |
| PPH-4 | wt% | 2 | | | | | | | | |
| Blend A1 | wt% | | 29,55 | | 50 | | | | | |
| Blend A2 | wt% | | | | | | | | 30 | |
| Blend A3 | wt% | | | | | | 50 | | | |
| Blend A4 | wt% | | | | | | | | | 40 |
| Blend A5 | wt% | | | | | 50 | | | | |
| Blend A6 | wt% | | | 50 | | | | | | |
| Blend A7 | wt% | 0,1 | | | | | | 50 | | |
| CAC 2.5 /CALCITEC M/ 5 | wt% | | 0,1 | 0,1 | 0,1 | 0,1 | 0,1 | 0,1 | 0,1 | 0,1 |
| TALC 2.9 | wt% | 38,55 | 40 | 40 | 40 | 40 | 40 | 40 | 40 | 40 |
| HC001A-B1 | wt% | 0 | 0,65 | 0,65 | 0,65 | 0,65 | 0,65 | 0,65 | 0,65 | 0,65 |
| MB 95-BLACK 7-PE-40 | wt% | 1 | 1 | 1 | 1 | 1 | 1 | 1 | 1 | 1 |

(continued)

| Material | unit | CE1 | IE1 | IE2 | IE3 | IE4 | IE5 | IE6 | IE7 | IE8 |
|---|---|---|---|---|---|---|---|---|---|---|
| AA1 22PWD | wt% | | 0,3 | 0,3 | 0,3 | 0,3 | 0,3 | 0,3 | 0,3 | 0,3 |
| AA120PWD | wt% | 0,3 | | | | | | | | |
| AO106PWD | wt% | 0,2 | | | | | | | | |
| AO1 | wt% | 0,1 | 0,1 | 0,1 | 0,1 | 0,1 | 0,1 | 0,1 | 0,1 | 0,1 |
| AO2 | wt% | 0,4 | 0,4 | 0,4 | 0,4 | 0,4 | 0,4 | 0,4 | 0,4 | 0,4 |
| ARALDITE GT 7072 | wt% | 0,95 | 0,95 | 0,95 | 0,95 | 0,95 | 0,95 | 0,95 | 0,95 | 0,95 |
| AO3 | wt% | | 0,5 | 0,5 | 0,5 | 0,5 | 0,5 | 0,5 | 0,5 | 0,5 |
| Total amount of additives, wt% | | | | 4 | 4 | 4 | 4 | 4 | 4 | 4 |
| MFR2 230°C / 2.16 kg | g/10min | 6.0 (4.8-7.2) | 5,16 | 7,1 | 6,6 | 9,6 | 6,7 | 7,4 | 12,0 | 6,7 |
| tensile modulus 23°C | MPa | 4974 | 4192 | 3352 | 3335 | 3952 | 3418 | 3679 | 4335 | 3936 |
| flexural modulus 23°C | MPa | 4400 | 4354 | 3657 | 3686 | 3876 | 3870 | 4082 | 4413 | 3958 |
| impact strength complete/hinge | kJ/m$^2$ | 1,6 | 2,4 | 1,6 | 2,2 | 1,4 | 1,8 | 1,5 | 1,3 | 1,4 |

## Claims

1. Polyolefin composition comprising

   a) 5-30 wt% (based on the overall weight of the polyolefin composition) of at least one polypropylene homopolymer; wherein the at least one polypropylene homopolymer is selected from a group comprising

   - at least one polypropylene homopolymer (PPH-1) having a melt flow rate $MFR_2$ (230°C, 2.16 kg, measured according to ISO 1133) in the range of 5 - 10 g/10 min, preferably of 5 -8 g/10min, more preferably of 6 -7 g/10 min;
   - at least one polypropylene homopolymer (PPH-2) having a melt flow rate $MFR_2$ (230°C, 2.16 kg, measured according to ISO 1133) in the range of range of 10 -30 g/10min, preferably of 15 - 25 g/10min, more preferably of 18-22 g/10 min;
   - at least one polypropylene homopolymer (PPH-3) having a melt flow rate $MFR_2$ (230°C, 2.16 kg, measured according to ISO 1133) in the range of 5 - 15 g/10 min, preferably of 5 - 10 g/10min, more preferably of 7-9g/10 min;
   - at least one polypropylene homopolymer (PPH-4) having a melt flow rate $MFR_2$ (230°C, 2.16 kg, measured according to ISO 1133) in the range of 60 - 100 g/10 min, preferably of 70 - 80 g/10min, more preferably of 73-77 g/10 min,
   or from a combination thereof,

   b) 25-60 wt% (based on the overall weight of the polyolefin composition) of a blend of recycled plastic material comprising polypropylene and polyethylene in a ratio between 3 : 7 and 49.5 : 1, which is recovered from a waste plastic material derived from post-consumer and/or post-industrial waste;
   c) 20-50 wt% (based on the overall weight of the polyolefin composition) of at least one particulate filler, in particular talc, and optionally further additives, wherein the sum of all ingredients adds always up to 100 wt%,

   wherein the polyolefin composition is **characterized by**

- a melt flow rate $MFR_2$ (230°C, 2.16 kg, measured according to ISO 1133) of at least 3.5 g/10 min; and
- a tensile modulus at 23°C of at least 3 GPa (ISO 527-2).

2. Polyolefin composition according to Claim 1, **characterized by** a melt flow rate $MFR_2$ (2.16 kg, 230°C, measured according to ISO 1133) in the range between 4 and 15 g/10 min, preferably between 5 and 12 g/10min, more preferably between 6 and 10 g/10min.

3. Polyolefin composition according to one of the preceding claims **characterized by** a tensile modulus (ISO 527-2) of at least 3.2 GPa, preferably of at least 3.5 GPa; more preferably of at least 4 GPa, in particular in a range between 3 and 4.5 GPa, more in particular in a range between 3.3 and 4.2 GPa, even more particular in a range between 3.4 and 4.0 GPa.

4. Polyolefin composition according to one of the preceding claims, **characterized by** an impact strength (ISO179-1, Charpy 1eA +23°C) of at least 1.0 $kJ/m^2$, preferably of at least 1.5 $kJ/m^2$, more preferably at least 1.8 $kJ/m^2$, still more preferably of at least 2 $kJ/m^2$, in particular in a range between 1.0 and 3.0 $kJ/m^2$, more in particular in a range between 1.3 and 2.5 $kJ/m^2$, even more particular in a range between 1.5 and 2.0 $kJ/m^2$

5. Polyolefin composition according to one of the preceding claims , **characterized in that** it comprises 6-25 wt%, preferably 10-20 wt% (based on the overall weight of the polyolefin composition) of the at least one polypropylene homopolymer.

6. Polyolefin composition according to one of the preceding claims **characterized in that** it comprises 35 - 55 wt%, preferably 40 - 50 wt% (based on the overall weight of the polyolefin composition) of the blend of recycled plastic material comprising polypropylene and polyethylene and having a melt flow rate $MFR_2$ (230°C, 2.16 kg, measured according to ISO 1133) in the range of 5 - 100g/10 min, preferably of 10 - 80 g/10 min, more preferably of 15 - 50 g/10min.

7. Polyolefin composition according to one of the preceding claims **characterized in that** the blend of recycled plastic material comprises at least 50 wt%, preferably at least 60 wt%, more preferably at least 70 wt%, even more preferably at least 80 wt% and still more preferably at least 90 wt% polypropylene.

8. Polyolefin composition according to one of the preceding claims **characterized in that** blend of recycled plastic material comprises less than 40 wt%, preferably less than 30 wt%, more preferably less than 20 wt%, most preferably less than 10 wt% polyethylene.

9. Polyolefin composition according to one of the preceding claims **characterized in that** it comprises 30-50 wt%, preferably 35-45 wt%, more preferably 38-40 wt% (based on the overall weight of the polyolefin composition) of talc.

10. Polyolefin composition according to one of the preceding claims **characterized in that** the talc comprises particles with a size $d_{50}$ of 2.5 - 5 $\mu$m, preferably of 3.0 - 4.5 $\mu$m, more preferably of 3.5 - 4.0 $\mu$m.

11. Use of a polyolefin composition according to one of the preceding claims in the manufacture of appliances, in particular household appliances.

12. An article comprising the polyolefin composition according to one of the claims 1-10.

13. A process for preparing the polyolefin composition according to any one of claims 1 to 10, comprising the steps of

- providing the at least one polypropylene homopolymer, the blend of recycled plastic material, and the particulate filler in the required amounts;
- feeding /dosing the at least one polypropylene homopolymer, the blend of recycled plastic material and the particulate filler separately or as a mixture into at least one extruder,
- melting the mixture in the at least one extruder, and
- optionally pelletizing the obtained polyolefin composition.

14. Process according to claim 13, **characterized in that** the blend of recycled plastic material is fed into at least one first extruder, in particular a single screw extruder, is melted in the first extruder and the melt is subsequently fed into at least on second extruder, wherein the at least one polypropylene homopolymer and the particulate filler are dosed into the at least one second extruder.

**Patentansprüche**

1.  Polyolefinzusammensetzung enthaltend

    a) 5 - 30 Gew.-% (bezogen auf das Gesamtgewicht der Polyolefin-Zusammensetzung) mindestens eines Polypropylen-Homopolymers; wobei das mindestens eine Polypropylen-Homopolymer ausgewählt ist aus einer Gruppe, die umfasst

    - mindestens ein Polypropylen-Homopolymer (PPH-1) mit einer Schmelzflussrate $MFR_2$ (230°C, 2,16 kg, gemessen nach ISO 1133) im Bereich von 5
    - 10 g/10 min, vorzugsweise von 5 - 8 g/10 min, besonders bevorzugt von 6 - 7 g/10 min;
    - mindestens ein Polypropylen-Homopolymer (PPH-2) mit einer Schmelzflussrate $MFR_2$ (230°C, 2,16 kg, gemessen nach ISO 1133) im Bereich von 10
    - 30 g/10min, vorzugsweise von 15 - 25 g/10min, besonders bevorzugt von 18-22 g/10min;
    - mindestens ein Polypropylen-Homopolymer (PPH-3) mit einer Schmelzflussrate $MFR_2$ (230°C, 2,16 kg, gemessen nach ISO 1133) im Bereich von 5
    - 15 g/10 min, vorzugsweise von 5 - 10 g/10 min, besonders bevorzugt von 7-9 g/10 min;
    - mindestens ein Polypropylen-Homopolymer (PPH-4) mit einer Schmelzflussrate $MFR_2$ (230°C, 2,16 kg, gemessen nach ISO 1133) im Bereich von 60
    - 100 g/10 min, vorzugsweise von 70 - 80 g/10 min, besonders bevorzugt von 73-77 g/10 min,
    oder aus einer Kombination davon,

    b) 25-60 Gew.-% (bezogen auf das Gesamtgewicht der Polyolefin-Zusammensetzung) eines Gemischs aus recyceltem Kunststoffmaterial, das Polypropylen und Polyethylen in einem Verhältnis zwischen 3:7 und 49,5:1 umfasst, das aus einem Kunststoffabfallmaterial gewonnen wird, das aus Post-Verbraucher- und/oder Post-Industrie-Abfällen stammt;
    c) 20-50 Gew.-% (bezogen auf das Gesamtgewicht der Polyolefin-Zusammensetzung) mindestens eines partikelförmigen Füllstoffs, insbesondere Talkum, und gegebenenfalls weitere Zusatzstoffe, wobei sich die Summe aller Inhaltsstoffe stets auf 100 Gew.-% addiert,

    wobei die Polyolefin-Zusammensetzung **gekennzeichnet ist durch**

    - eine Schmelzflussrate $MFR_2$ (230°C, 2,16 kg, gemessen nach ISO 1133) von mindestens 3,5 g/10 min; und
    - ein Zugmodul bei 23°C von mindestens 3 GPa (ISO 527-2).

2.  Polyolefinzusammensetzung nach Anspruch 1, **gekennzeichnet durch** eine Schmelzflussrate $MFR_2$ (2,16 kg, 230°C, gemessen nach ISO 1133) im Bereich zwischen 4 und 15 g/10 min, vorzugsweise zwischen 5 und 12 g/10min, besonders bevorzugt zwischen 6 und 10 g/10min.

3.  Polyolefinzusammensetzung nach einem der vorhergehenden Ansprüche, **gekennzeichnet durch** einen Zugmodul (ISO 527-2) von mindestens 3,2 GPa, vorzugsweise von mindestens 3,5 GPa; noch bevorzugter von mindestens 4 GPa, insbesondere in einem Bereich zwischen 3 und 4,5 GPa, spezieller in einem Bereich zwischen 3,3 und 4,2 GPa, noch spezieller in einem Bereich zwischen 3,4 und 4,0 GPa.

4.  Polyolefinzusammensetzung nach einem der vorhergehenden Ansprüche, **gekennzeichnet durch** eine Schlagzähigkeit (ISO179-1, Charpy 1eA +23°C) von mindestens 1,0 $kJ/m^2$, vorzugsweise von mindestens 1,5 $kJ/m^2$, bevorzugter von mindestens 1.8 $kJ/m^2$, noch bevorzugter von mindestens 2 $kJ/m^2$, insbesondere in einem Bereich zwischen 1,0 und 3,0 $kJ/m^2$, bevorzugter in einem Bereich zwischen 1,3 und 2,5 $kJ/m^2$, noch bevorzugter in einem Bereich zwischen 1,5 und 2,0 $kJ/m^2$.

5.  Polyolefinzusammensetzung nach einem der vorhergehenden Ansprüche, **dadurch gekennzeichnet, dass** sie 6-25 Gew.-%, vorzugsweise 10-20 Gew.-% (bezogen auf das Gesamtgewicht der Polyolefinzusammensetzung) des mindestens einen Polypropylen-Homopolymers enthält.

6.  Polyolefinzusammensetzung nach einem der vorhergehenden Ansprüche, **dadurch gekennzeichnet, dass** sie 35 - 55 Gew.-%, vorzugsweise 40 - 50 Gew.-% (bezogen auf das Gesamtgewicht der Polyolefinzusammensetzung) des Blends aus recyceltem Kunststoffmaterial umfasst, das Polypropylen und Polyethylen umfasst und eine Schmelzflussrate MFR$_2$ (230°C, 2,16 kg, gemessen nach ISO 1133) im Bereich von 5

- 100 g/10 min, vorzugsweise von 10 - 80 g/10 min, noch bevorzugter von 15 - 50 g/10 min aufweist.

7. Polyolefinzusammensetzung nach einem der vorhergehenden Ansprüche, **dadurch gekennzeichnet, dass** die Mischung aus recyceltem Kunststoffmaterial mindestens 50 Gew.-%, vorzugsweise mindestens 60 Gew.-%, bevorzugter mindestens 70 Gew.-%, noch bevorzugter mindestens 80 Gew.-% und noch bevorzugter mindestens 90 Gew.-% Polypropylen umfasst.

8. Polyolefinzusammensetzung nach einem der vorhergehenden Ansprüche, **dadurch gekennzeichnet, dass** die Mischung aus recyceltem Kunststoffmaterial weniger als 40 Gew.-%, vorzugsweise weniger als 30 Gew.-%, noch bevorzugter weniger als 20 Gew.-%, am meisten bevorzugt weniger als 10 Gew.-% Polyethylen umfasst.

9. Polyolefinzusammensetzung nach einem der vorhergehenden Ansprüche, **dadurch gekennzeichnet, dass** sie 30-50 Gew.-%, vorzugsweise 35-45 Gew.-%, besonders bevorzugt 38-40 Gew.-% (bezogen auf das Gesamtgewicht der Polyolefin-Zusammensetzung) Talkum umfasst.

10. Polyolefinzusammensetzung nach einem der vorhergehenden Ansprüche, **dadurch gekennzeichnet, dass** der Talk Partikel mit einer Größe d$_{50}$ von 2,5 - 5 μm, vorzugsweise von 3,0 - 4,5 μm, besonders bevorzugt von 3,5 - 4,0 μm umfasst.

11. Verwendung einer Polyolefinzusammensetzung nach einem der vorhergehenden Ansprüche bei der Herstellung von Geräten, insbesondere Haushaltsgeräten.

12. Gegenstand, umfassend die Polyolefinzusammensetzung nach einem der Ansprüche 1-10.

13. Verfahren zur Herstellung der Polyolefinzusammensetzung nach einem der Ansprüche 1 bis 10, umfassend die Schritte

- Bereitstellung des mindestens einen Polypropylen-Homopolymers, der Mischung aus recyceltem Kunststoff und des partikelförmigen Füllstoffs in den erforderlichen Mengen;
- Zuführen/Dosieren des mindestens einen Polypropylen-Homopolymers, der Mischung aus recyceltem Kunststoff und des partikelförmigen Füllstoffs getrennt oder als Mischung in mindestens einen Extruder,
- Schmelzen der Mischung in dem mindestens einen Extruder und
- gegebenenfalls Granulierung der erhaltenen Polyolefin-Zusammensetzung.

14. Verfahren nach Anspruch 13, **dadurch gekennzeichnet, dass** das Gemisch aus recyceltem Kunststoffmaterial in mindestens einen ersten Extruder, insbesondere einen Einschneckenextruder, eingespeist, im ersten Extruder aufgeschmolzen und die Schmelze anschließend in mindestens einen zweiten Extruder eingespeist wird, wobei das mindestens eine Polypropylen-Homopolymer und der partikelförmige Füllstoff in den mindestens einen zweiten Extruder dosiert werden.

**Revendications**

1. Composition de polyoléfine comprenant

a) 5 à 30% en poids (par rapport au poids total de la composition de polyoléfine) d'au moins un homopolymère de polypropylène ; où l'au moins un homopolymère de polypropylène est choisi dans un groupe comprenant

- au moins un homopolymère de polypropylène (PPH-1) ayant un indice de fluidité MFR$_2$ (230°C, 2,16 kg, mesuré selon la norme ISO 1133) dans la plage allant de 5 à 10 g/10 min, de préférence de 5 à 8 g/10 min, plus préférablement de 6 à 7 g/10 min ;
- au moins un homopolymère de polypropylène (PPH-2) ayant un indice de fluidité MFR$_2$ (230°C, 2,16 kg, mesuré selon la norme ISO 1133) dans la plage allant de 10 à 30 g/10 min, de préférence de 15 à 25 g/10 min, plus préférablement de 18 à 22 g/10 min ;

- au moins un homopolymère de polypropylène (PPH-3) ayant un indice de fluidité MFR$_2$ (230°C, 2,16 kg, mesuré selon la norme ISO 1133) dans la plage allant de 5 à 15 g/10 min, de préférence de 5 à 10 g/10 min, plus préférablement de 7 à 9 g/10 min ;

- au moins un homopolymère de polypropylène (PPH-4) ayant un indice de fluidité MFR$_2$ (230°C, 2,16 kg, mesuré selon la norme ISO 1133) dans la plage allant de 60 à 100 g/10 min, de préférence de 70 à 80 g/10 min, plus préférablement de 73 à 77 g/10 min,

ou d'une combinaison de ceux-ci,

b) 25 à 60% en poids (par rapport au poids total de la composition de polyoléfine) d'un mélange de matière plastique recyclée comprenant du polypropylène et du polyéthylène dans un rapport compris entre 3 : 7 et 49,5 : 1, qui est récupérée à partir de déchets de matières plastiques dérivés de déchets post-consommation et/ou post-industriels ;

c) 20 à 50% en poids (par rapport au poids total de la composition de polyoléfine) d'au moins une charge particulaire, en particulier du talc, et éventuellement des additifs supplémentaires, où la somme de tous les ingrédients est égale toujours à 100% en poids,

dans laquelle la composition de polyoléfine est **caractérisée par**

- un indice de fluidité MFR$_2$ (230°C, 2,16 kg, mesuré selon la norme ISO 1133) d'au moins 3,5 g/10 min ; et
- un module de traction à 23°C d'au moins 3 GPa (ISO 527-2).

2. Composition de polyoléfine selon la revendication 1, **caractérisée par** un indice de fluidité MFR$_2$ (2,16 kg, 230°C, mesuré selon la norme ISO 1133) dans la plage comprise entre 4 et 15 g/10 min, de préférence entre 5 et 12 g/10min, plus préférablement entre 6 et 10 g/10min.

3. Composition de polyoléfine selon l'une des revendications précédentes **caractérisée par** un module de traction (ISO 527-2) d'au moins 3,2 GPa, de préférence d'au moins 3,5 GPa ; plus préférablement d'au moins 4 GPa, en particulier dans une plage comprise entre 3 et 4,5 GPa, plus particulièrement dans une plage comprise entre 3,3 et 4,2 GPa, encore plus particulièrement dans une plage comprise entre 3,4 et 4,0 GPa.

4. Composition de polyoléfine selon l'une des revendications précédentes, **caractérisée par** une résistance aux chocs (ISO179-1, Charpy 1eA +23°C) d'au moins 1,0 kJ/m$^2$, de préférence d'au moins 1,5 kJ/m$^2$, plus préférablement d'au moins 1,8 kJ/m$^2$, mieux encore d'au moins 2 kJ/m$^2$, en particulier dans une plage comprise entre 1,0 et 3,0 kJ/m$^2$, plus particulièrement dans une plage comprise entre 1,3 et 2,5 kJ/m$^2$, encore plus particulièrement dans une plage comprise entre 1,5 et 2,0 kJ/m$^2$.

5. Composition de polyoléfine selon l'une des revendications précédentes, **caractérisée en ce qu'**elle comprend 6 à 25% en poids, de préférence 10 à 20% en poids (par rapport au poids total de la composition de polyoléfine) de l'au moins un homopolymère de polypropylène.

6. Composition de polyoléfine selon l'une des revendications précédentes **caractérisée en ce qu'**elle comprend 35 à 55% en poids, de préférence 40 à 50% en poids (par rapport au poids total de la composition de polyoléfine) du mélange de matière plastique recyclée comprenant du polypropylène et du polyéthylène et ayant un indice de fluidité MFR$_2$ (230°C, 2,16 kg, mesuré selon la norme ISO 1133) dans la plage allant de 5 à 100 g/10 min, de préférence de 10 à 80 g/10 min, plus préférablement de 15 à 50 g/10 min.

7. Composition de polyoléfine selon l'une des revendications précédentes **caractérisée en ce que** le mélange de matière plastique recyclée comprend au moins 50% en poids, de préférence au moins 60% en poids, plus préférablement au moins 70% en poids, encore plus préférablement au moins 80% en poids et mieux encore au moins 90% en poids de polypropylène.

8. Composition de polyoléfine selon l'une des revendications précédentes **caractérisée en ce que** le mélange de matière plastique recyclée comprend moins de 40% en poids, de préférence moins de 30% en poids, plus préférablement moins de 20% en poids, le plus préférablement moins de 10% en poids de polyéthylène.

9. Composition de polyoléfine selon l'une des revendications précédentes **caractérisée en ce qu'**elle comprend 30 à 50% en poids, de préférence 35 à 45% en poids, plus préférablement 38 à 40% en poids (par rapport au poids total de la composition de polyoléfine) de talc.

**10.** Composition de polyoléfine selon l'une des revendications précédentes **caractérisée en ce que** le talc comprend des particules ayant une taille $d_{50}$ allant de 2,5 à 5 $\mu$m, de préférence de 3,0 à 4,5 $\mu$m, plus préférablement de 3,5 à 4,0 $\mu$m.

**11.** Utilisation d'une composition de polyoléfine selon l'une des revendications précédentes dans la fabrication d'appareils, en particulier d'appareils électroménagers.

**12.** Article comprenant la composition de polyoléfine selon l'une des revendications 1 à 10.

**13.** Procédé de préparation de la composition de polyoléfine selon l'une quelconque des revendications 1 à 10, comprenant les étapes

- de fourniture de l'au moins un homopolymère de polypropylène, du mélange de matière plastique recyclée et de la charge particulaire dans les quantités requises ;
- d'introduction/dosage de l'au moins un homopolymère de polypropylène, du mélange de matière plastique recyclée et de la charge particulaire séparément ou sous forme d'un mélange dans au moins une extrudeuse,
- de fusion du mélange dans l'au moins une extrudeuse, et
- éventuellement, de pastillage de la composition de polyoléfine obtenue.

**14.** Procédé selon la revendication 13, **caractérisé en ce que** le mélange de matière plastique recyclée est introduit dans au moins une première extrudeuse, en particulier une extrudeuse monovis, est fondu dans la première extrudeuse et la matière fondue est ensuite introduite dans au moins une deuxième extrudeuse, où l'au moins un homopolymère de polypropylène et la charge particulaire sont dosés dans l'au moins une deuxième extrudeuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014167493 A1
- WO 2019224129 A1
- CN 110372957
- JP 2003024377 A
- JP 06016876 A
- WO 03031174 A2

### Non-patent literature cited in the description

- **CURTZWILER et al.** Mixed post-consumer recycled polyolefins as a property tuning material for virgin polypropylene. *JOURNAL OF CLEANER PROOUCTION,* 2019
- **VYNCKE et al.** The effect of polyethylene on the properties of talc filled recycled polypropylene. *PLASTICS, RUBBER & COMPOSITES: MACROMOLECULAR ENGINEERING,* 2020
- *CHEMICAL ABSTRACTS,* 6683-19-8
- *CHEMICAL ABSTRACTS,* 31570-04-4
- *CHEMICAL ABSTRACTS,* 693- 36-7
- *CHEMICAL ABSTRACTS,* 11097-59-9
- *CHEMICAL ABSTRACTS,* 1592-23-0
- *CHEMICAL ABSTRACTS,* 557-05-1
- *CHEMICAL ABSTRACTS,* 60676-86-0
- *CHEMICAL ABSTRACTS,* 7631-86-9
- *CHEMICAL ABSTRACTS,* 112926-00-8
- *CHEMICAL ABSTRACTS,* 1318-74-7
- *CHEMICAL ABSTRACTS,* 1344-00-9
- *CHEMICAL ABSTRACTS,* 92704-41-1
- *CHEMICAL ABSTRACTS,* 1327-36-2
- *CHEMICAL ABSTRACTS,* 1344-95-2
- *CHEMICAL ABSTRACTS,* 1344-01-0
- *CHEMICAL ABSTRACTS,* 52829-07-9
- *CHEMICAL ABSTRACTS,* 1843-05-6
- *CHEMICAL ABSTRACTS,* 532-32-1
- *CHEMICAL ABSTRACTS,* 135861-56-2
- *CHEMICAL ABSTRACTS,* 97593-29-8
- *CHEMICAL ABSTRACTS,* 71786-60-2
- *CHEMICAL ABSTRACTS,* 204-393-1